# EUROPEAN PATENT SPECIFICATION

(11) **EP 3 148 340 B1**
(45) Date of publication and mention of the grant of the patent: **18.04.2018**
(21) Application number: 15732476.5
(22) Date of filing: 27.05.2015
(51) Int. Cl.: A22C 29/02, B65G 47/24

(54) **APPARATUS AND METHOD FOR POSITIONING OF SHRIMP**
VORRICHTUNG UND VERFAHREN ZUR POSITIONIERUNG VON GARNELEN
APPAREIL ET PROCÉDÉ DE POSITIONNEMENT DE CREVETTES

(30) Priority: 28.05.2014 NL 2012902
(43) Date of publication of application: 05.04.2017
(73) Proprietor: Kant, Albert, 9934 EG Delfzijl (NL)
(72) Inventor: Kant, Albert, 9934 EG Delfzijl (NL)
(74) Representative: V.O.
(86) International application number: PCT/NL2015/050381
(87) International publication number: WO 2015/183089

(56) References cited:
- EP-A1- 0 743 010
- EP-A1- 2 471 373

## Description

The invention relates to a positioning apparatus for, in operation condition, positioning of shrimp in a predetermined orientation, said shrimp being supplied in singulated manner to the positioning apparatus, for obtaining a singulated output row of shrimp being positioned in the predetermined orientation, wherein said output row is moving via output conveying means of the positioning apparatus. The invention further relates to a method for positioning of shrimp in a predetermined orientation, said shrimp being supplied in singulated manner to such a positioning apparatus.

Such an apparatus and method are utilized prior to the mechanized supply of shrimp to a mechanized peeling apparatus. Examples of such a mechanized peeling apparatus are amongst others known from WO2010/082819A1 and from EP0743010A1.

In such a mechanized supply, the shrimp are supplied in a row to the peeling apparatus, where they are peeled one by one. In order to be peeled well, the shrimp in the row have to lie as good as possible in a specific orientation relative to the peeling apparatus. This requires a careful and accurate positioning of the shrimp.

For said positioning, it has been proposed in EP2471373A1 to utilize a robot, wherein robot arms having gripping means, based on an image recording per shrimp, pick up each shrimp in its arbitrary orientation and then deposit it in a predetermined, desired re-orientation. The utilization of such a robot has various drawbacks.

After all, such a robot is relatively expensive to purchase, as well as to maintain. For example, it is not easy to repair such a robot in case of electronical and/or mechanical failures. In case of such failures, one mostly will have to rely on the assistance of the supplier. This leads to interruptions in the production process, with adverse financial consequences. Furthermore, in the case of small, slippery and irregularly shaped natural products like shrimp, such a robot is not accurate/reliable due to things like uncertain interpretations of individual image recordings, inaccurate prediction of the re-orientation operation, and uncertainty with respect to individual gripping orientation of each shrimp.

EP0743010A1 discloses mechanical means for obtaining said positioning. One of the parts of this known mechanical positioning means is a sliding chute as shown in Fig. 5 of EP0743010A1. Such a sliding chute may be used to achieve, based on gravitation, that shrimp come to lie with the back facing towards a predetermined side. The reason is that a shrimp, which is sliding downwards along the sliding chute, has the tendency to downwardly slide with its back facing forwards. This tendency may still be enhanced by blowing means creating a slight upwardly directed blowing flow in the sliding chute. It is remarked that presenting each shrimp to the peeling apparatus with the back facing towards a predetermined side, is a very important requirement, because in the peeling apparatus there has to be made a longitudinal incision in the back of each shrimp.

However, a problem with such a sliding chute is that shrimp can not be supplied too quickly, one after the other, to the sliding chute. Otherwise, congestions could result in the sliding chute.

This has to do with the fact that shrimp are natural products. They differ relative to one another in respect of shape and stickyness. Also, material of their shells and their feelers may come loose and may get stuck in the sliding chute. Apart from possible congestions, there will in any case arise huge differences in times of slide-fall of individual shrimp, whereby some shrimp at the end of the sliding chute will get relatively close behind their direct predecessors, while other shrimp at the end of the sliding chute will get relatively far behind their direct predecessors. For most peeling apparatus it is of importance that there is a minimum distance between two shrimp successively being supplied to the peeling apparatus. If shrimp are presented too close behind each other to the peeling apparatus, the peeling may fail and/or the peeling apparatus may get stuck.

All of this has the consequence that in practice a certain sliding chute has a certain throughput capacity for a certain type of shrimp, wherein "throughput capacity" is meant to indicate the maximum number of shrimp that, one after the other, can be put-through per unit of time. If the throughput of shrimp offered to the sliding chute exceeds the throughput capacity concerned of the sliding chute, the sliding chute may get stuck and/or problems may arise at the peeling apparatus in that some shrimp are offered too close, one after the other, to the peeling apparatus.

In an application within a shrimp peeling apparatus being arranged for peeling of the "Dutch Shrimp" (scientific name "crangon crangon"), which apparatus is provided with a sliding chute of a type similar to that of Fig. 5 of EP0743010A1, and of a mechanized peeling apparatus of a type similar to that of Fig. 3A of WO2010/082819A1, it has appeared that the sliding chute has a throughput capacity of about 1 shrimp per second. For this throughput capacity of about 1 shrimp per second, the peeling apparatus, placed behind this sliding chute, peels about 5 kilogram unpeeled shrimp per hour. However, it is remarked that the peeling apparatus concerned, taken on itself, has a higher throughput capacity than the sliding chute concerned. This higher throughput capacity of the peeling apparatus would occur when, with obedience to said minimum necessary distance between two shrimp successively being supplied to the peeling apparatus, all shrimp supplied to the peeling apparatus lie as equidistant as possible and as close as possible, one after the other in a row (enabling a higher shrimp density in the row), and when that row is supplied with a higher speed to the peeling apparatus.

In paragraph [0019] of EP2471373A1 it is mentioned that in tests with the positioning robot, which is known from EP2471373A1 for the positioning of shrimp one after the other in a row, there has been realised a throughput capacity of about 110 shrimp per minute. This comes down to about 1.8 shrimp per second, or about 9 kilogram unpeeled shrimp per hour. Taken on itself, this is an improvement as compared to the abovementioned approximately 5 kilogram unpeeled shrimp per hour, however, the positioning robot has other important drawbacks, as already mentioned herein above.

It is an object of the invention to provide a solution according to which with mechanical positioning means, instead of with a positioning robot, a yet considerably higher throughput capacity in the positioning of shrimp is obtained than with the abovementioned positioning robot.

For that purpose, the invention provides a positioning apparatus according to the appended independent claim 1, as well as a method according to the appended independent claim 8. Specific embodiments of the invention are set forth in the appended dependent claims 2-7, as well as in the appended dependent claims 9-10.

Hence, the invention provides a positioning apparatus for, in operation condition, positioning of shrimp in a predetermined orientation, said shrimp being supplied in singulated manner to the positioning apparatus, for obtaining a singulated output row of shrimp being positioned in the predetermined orientation, wherein said output row is moving via output conveying means of the positioning apparatus, characterized by a sliding chute assembly, which comprises an endless conveyor belt and multiple sliding chutes for shrimp, said sliding chutes being held by the endless conveyor belt, wherein, as seen in said operation condition:
- the sliding chutes each comprise a corresponding upper shrimp entry, a corresponding lower shrimp exit, and a corresponding inclination trajectory therebetween, which sliding chutes in circumferential direction of the endless conveyor belt are arranged next to one another with their inclination trajectories alongside one another;
- the sliding chutes in said arrangement are conveyed by the endless conveyor belt in a manner of going round in said circumferential direction;
- said supplied shrimp are supplied to the sliding chutes via said shrimp entries;
- the endless conveyor belt of the sliding chute assembly has a shrimp dispensing trajectory and the output conveying means has a shrimp receiving trajectory; and
- in the shrimp dispensing trajectory shrimp are dispensed via said shrimp exits from the sliding chutes and, in the shrimp receiving trajectory of the output conveying means, are supplied to the singulated output row.

Hence, according to the invention use is made of said sliding chute assembly with said endless conveyor belt and with said multiple sliding chutes arranged next to one another. Each of these sliding chutes is used to achieve that, based on the action of gravity, shrimp come to lie facing with the back towards a predetermined side, which is an important positioning aspect, since in the peeling apparatus there has to be made a longitudinal incision in the back of each shrimp. According to the invention, the shrimp, which are transported via the multiple sliding chutes being arranged next to one another, are supplied to the singulated output row. Thanks to this parallel-transport via the sliding chutes being arranged next to one another, shrimp can be successively supplied to each individual sliding chute at long mutual intervals, whereby congestions in the sliding chutes, being suspectible to congestions, are prevented, while at the same time the shrimp coming from the multiple sliding chutes being arranged next to one another can be supplied to the singulated output row at short distance after one another.

Thus, the sliding chute assembly, with the parallel-arranged sliding chutes being moved by the endless conveyor belt, has a considerably higher throughput capacity for a certain type of shrimp, than a single stationary similar sliding chute. Thereby, a high throughput capacity of a peeling apparatus, being placed after the sliding chute assembly, can actually be utilized.

In applying, in a shrimp peeling apparatus, a first experimental embodiment of a positioning apparatus according to the invention, it has appeared that the throughput capacity of the positioning apparatus concerned is about 4 to 5 times higher than the throughput capacity of a positioning apparatus in which a single, stationary sliding chute is applied. Instead of peeling only about 1 shrimp per second, this means that in applying in a shrimp peeling apparatus the positioning apparatus according to the invention concerned, about 4 to 5 shrimp per second can now be peeled from the singulated output row of shrimp. Instead of peeling from a singulated output row about 5 kilogram unpeeled shrimp per hour, it has appeared that with the positioning apparatus, according to the invention, concerned, there can be peeled about 20 to 25 kilogram unpeeled shrimp per hour.

In a preferable embodiment of a positioning apparatus according to the invention, each of the sliding chutes comprises control means, being arranged for, in said operation condition, slowing down in a controlled manner and/or temporarily stopping in a controlled manner a shrimp, which is sliding over the sliding chute concerned. Thanks to this control means, the moment and the position of transfer of each shrimp concerned from the sliding chute concerned to the singulated output row is controllable. Thereby, a high shrimp density in the singulated output row can be realised with obedience to a required minimum necessary distance between two successive shrimp in the singulated output row.

It is remarked that said slowing down and/or said temporarily stopping of sliding shrimp would be a large drawback, if in the positioning apparatus only a single, stationary sliding chute would have been applied. After all, the shrimp throughput would then considerably slow down. However, according to the invention, this drawback is effectively avoided thanks to the multiple sliding chutes, being arranged next to one another, of the sliding chute assembly.

It is further remarked that control means, being arranged for, in said operation condition, slowing down in a controlled manner a shrimp, which is sliding over the sliding chute concerned, can for example be formed by a paddle wheel, which turns with a controlled speed or which is turned by the gravity of the shrimp.

In a further preferable embodiment of a positioning apparatus according to the invention, said control means comprises a valve for, in said operation condition, temporarily stopping, at a predetermined height along the inclination trajectory of the sliding chute concerned, a shrimp sliding along said inclination trajectory until the moment at which the sliding chute concerned has attained a set going-round-position in said circumferential direction of the endless conveyor belt. With the help of such a valve, the moment and the position of transfer of each shrimp concerned from the sliding chute concerned to the singulated output row can be controlled in a reliable manner.

In a further preferable embodiment of a positioning apparatus according to the invention, said shrimp dispensing trajectory and said shrimp receiving trajectory by mutual overlapping are forming a shrimp transfering trajectory of the positioning apparatus, in the sense that, as seen in said operation condition, in said shrimp transfering trajectory a multiplicity of said shrimp exits of corresponding sliding chutes, which simultaneously are in said shrimp transfering trajectory, simultaneously allow for transfer of shrimp from said sliding chutes to the singulated output row.

Thanks to the fact that said shrimp transfering trajectory in principle allows for said simultaneous transfer of shrimp, probable large differences in times of slide-fall of shrimp, sliding over sliding chutes being arranged next to one another, said differences occurring between sliding chutes being arranged next to one another, can be effectively set off.

Such a shrimp being usable in connection with practicing the invention, may be typified as follows. Such a shrimp may be curved according to a substantially horseshoe-shape with a head and a tail at the respective free ends of the horseshoe-shape, with a back facing away from the head and the tail, with a first shrimp longitudinal side and an opposing second shrimp longitudinal side corresponding to the respective legs of the horseshoe-shape, wherein the head is at an end of the first shrimp longitudinal side and the tail is at an end of the second shrimp longitudinal side, with a first lying surface and an opposing second lying surface.

In a further preferable embodiment of a positioning apparatus according to the invention, and as seen in said operation condition:
- the output conveying means are arranged with separation walls, extending in height, between individual shrimp of the moving singulated output row; and
- such an individual shrimp, lying on its first lying surface or on its second lying surface, is lying with its first shrimp longitudinal side or with its second shrimp longitudinal side against such a separation wall.

The application of such separation walls promotes the obtaining of the desired orientations of shrimp in the singulated output row, as well as the obtaining of the desired mutual distances between shrimp in the singulated output row.

In a further preferable embodiment of a positioning apparatus according to the invention, the positioning apparatus further comprises turn-around blowing means, which, as seen in said operation condition, by blowing create a turn-around blowing flow, which is directed to the first lying surface concerned or the second lying surface concerned of said individual shrimp, and on which said individual shrimp is lying, with at least a component of the turn-around blowing flow, which component is extending transverse to the first lying surface concerned or the second lying surface concerned, in such manner that
- the turn-around blowing flow does turn around a shrimp, which is lying with the second shrimp longitudinal side against a separation wall concerned, onto its other lying surface by rolling over its first shrimp longitudinal side; while
- a shrimp, which is lying with the first shrimp longitudinal side against a separation wall concerned, as a consequence of lying against the separation wall concerned is prevented from thus turning around.

With the help of such turn-around blowing means, it is realised in a simple and reliable manner that the different shrimp in the singulated output row come to lie, as compared to one another, on the same lying surface.

In the following, the invention is further elucidated with reference to some non-limiting embodiments and with reference to the schematic figures in the attached drawing.
Fig. 1A shows, in view from above, an unpeeled shrimp being usable in connection with practicing the invention, this shrimp lying at its first lying surface.
Fig. 1B shows the shrimp of Fig. 1A in a cross-section according to the plane indicated in Fig. 1A by arrows I-B, wherein the view is taken in the direction of the arrows I-B.
Fig. 2 shows in a very schematical manner an example of an embodiment of a shrimp peeling apparatus, which comprises an example of an embodiment of a positioning apparatus according to the invention.
Fig. 3 shows the positioning apparatus of Fig. 2 in more detail, and in view from above.
Fig. 4A shows, in side view, an example of an embodiment of one of the multiple sliding chutes of the sliding chute assembly of the positioning apparatus of Fig. 3, wherein the sliding chute concerned is provided with the abovementioned control means in the form of the abovementioned valve, wherein the valve concerned is in closed condition.
Fig. 4B shows the situation of Fig. 4A again, however, this time wherein the valve concerned is in open condition.
Fig. 5 shows the positioning apparatus of Fig. 3 in a side view taken in the direction indicated in Fig. 3 by the arrow V.
Fig. 6 shows a detail of the positioning apparatus of Fig. 5 in a cross-section according to the plane indicated in Fig. 5 by arrows VI, wherein the view is taken in the direction of the arrows VI.
Fig. 7 shows a part of the situation of Fig. 3 in more detail.
Fig. 8A shows a part of the situation of Fig. 5 in more detail, which part is situated at the location of the abovementioned turn-around blowing means.
Fig. 8B shows the situation of Fig. 8A again, however, at a somewhat later point in time during operation than in Fig. 8A.
Fig. 8C shows the situation of Fig. 8B again, however, at a somewhat later point in time during operation than in Fig. 8B.

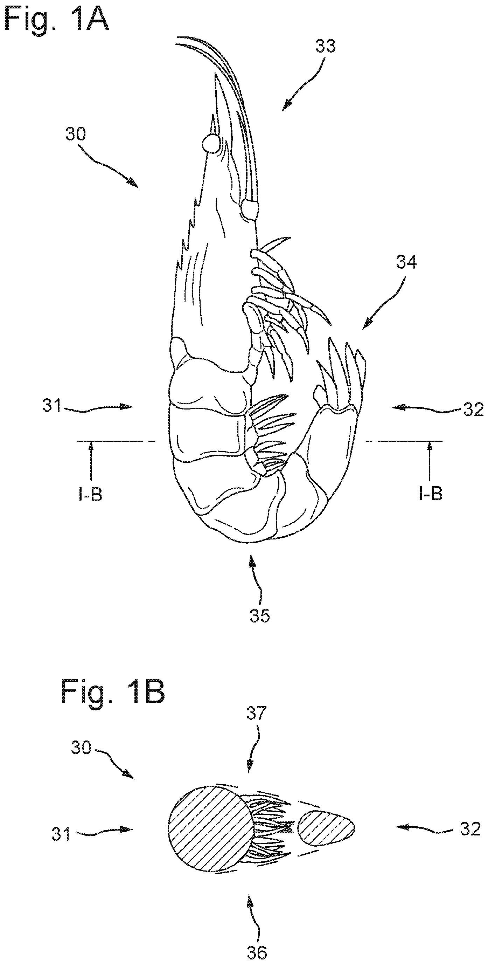

For the shrimp 30 shown in Figs. 1A and 1B, the first shrimp longitudinal side, the second shrimp longitudinal side, the head, the tail, the back, the first lying surface, and the second lying surface, all as mentioned above, are indicated by the reference numerals 31, 32, 33, 34, 35, 36, and 37, respectively.

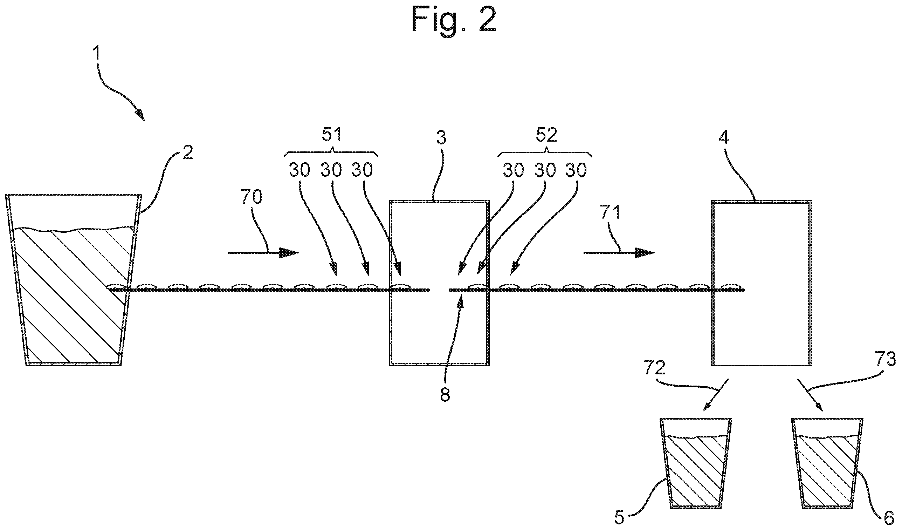

The shrimp peeling apparatus 1, shown in Fig. 2, comprises the shown stock 2, with an amount of shrimp 30 loaded therein, the shown positioning apparatus 3 accoding to the invention, and the shown peeling apparatus 4. Reference numeral 51 indicates a first singulated row of shrimp 30. The shrimp from this first singulated row 51 are coming from the stock 2, and they are supplied in the shown direction 70 to the positioning apparatus. In the first singulated row 51, these shrimp 30 have not yet been positioned in the abovementioned predetermined orientation. The fact is, that this positioning only takes place in the positioning apparatus 3. Reference numeral 52 indicates the abovementioned singulated output row of shrimp 30, which have been positioned in the predetermined orientation. This singulated output row 52 moves via the shown output conveying means 8 of the positioning apparatus 3 in the shown direction 71 towards the peeling apparatus 4. The shrimp 30 are peeled by the peeling apparatus 4, whereafter the peeled shrimp via the shown arrow 72 are supplied to the shown first holder 5, while the released peeling residue via the shown arrow 73 is supplied to the shown second holder 6.

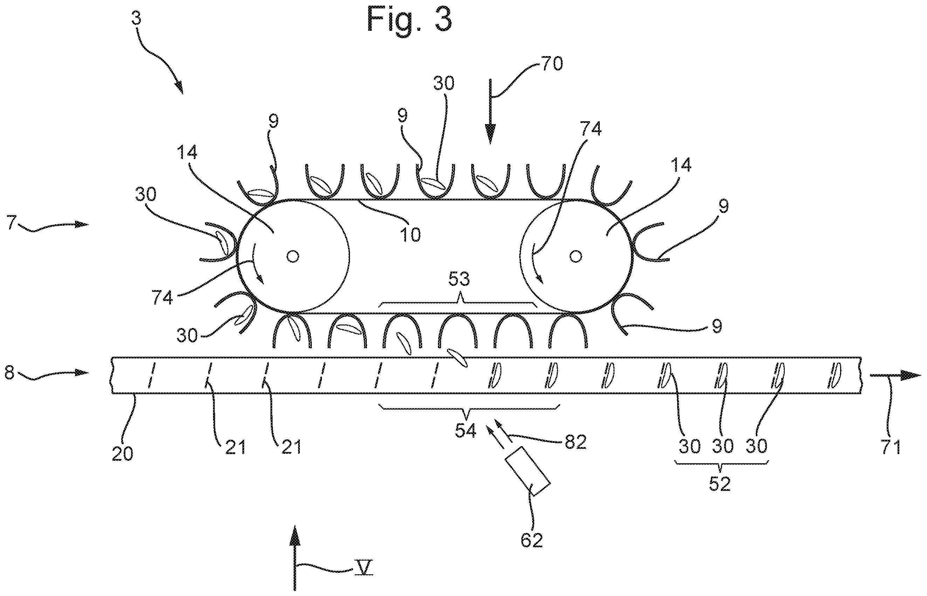

Reference is now made to Figs. 3 through 8C, in which the positioning apparatus 3 is shown in more detail. Therein, the sliding chute assembly and the output conveying means of the positioning apparatus 3 are indicated by the reference numerals 7 and 8, respectively. The endless conveyor belt and the multiple sliding chutes for shrimp, being held by the endless conveyor belt, are indicated by the reference numerals 10 and 9, respectively. Fig 3 shows that the endless conveyor belt 10 of the sliding chute assembly 7 is wound about two rolls 14, which turn in the shown direction 74.

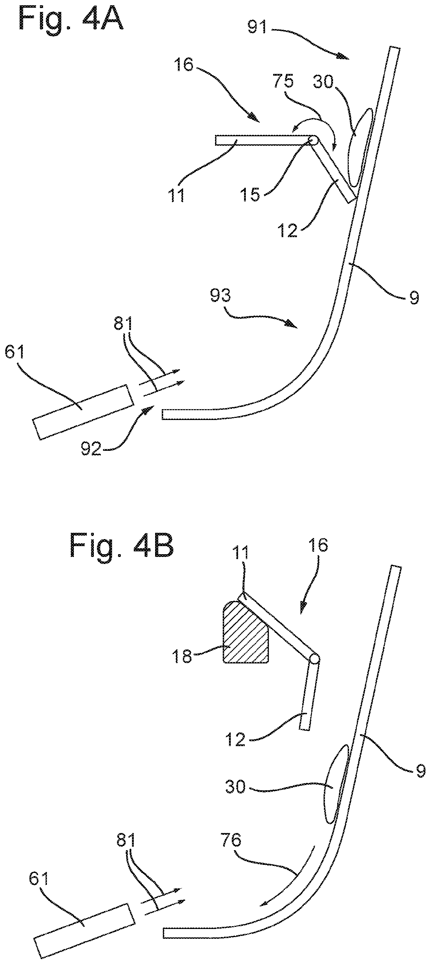

Figs. 4A and 4B show the shrimp entry 91, the shrimp exit 92, and the inclination trajectory 93 of each sliding chute 9. Figs. 4A and 4B also show an example of the valve, mentioned in the introduction, for temporarily stopping a shrimp, which is sliding along the inclination trajectory 93. This valve, indicated by reference numeral 16, comprises two blades 11 and 12, which in a mutually fixed position are reciprocally rotatable around an axis 15 according to the shown double arrow 75. In the situation of Fig. 4A, especially the gravity acting on the blade 11 takes care that the blade 12 is pressed against the sliding chute 9 in such manner that the blade 12 stops the shrimp 30. In the situation of Fig. 4B, a valve guiding element 18 keeps the blade 11 pressed upwards, whereby the blade 12 is loose from the sliding chute 9 in such manner that the shrimp 30 is not stopped anymore by the blade 12. Hereby, the shrimp slides further downward in the sliding direction 76. A shrimp sliding along the sliding chute 9 has the tendency to downwardly slide with its back facing forwards. This tendency may still be enhanced by blowing means creating a slight upwardly directed blowing flow along the sliding chute 9, which in the Figs. 4A and 4B is shown in the form of the first blowing means 61 with corresponding first blowing flow 81.

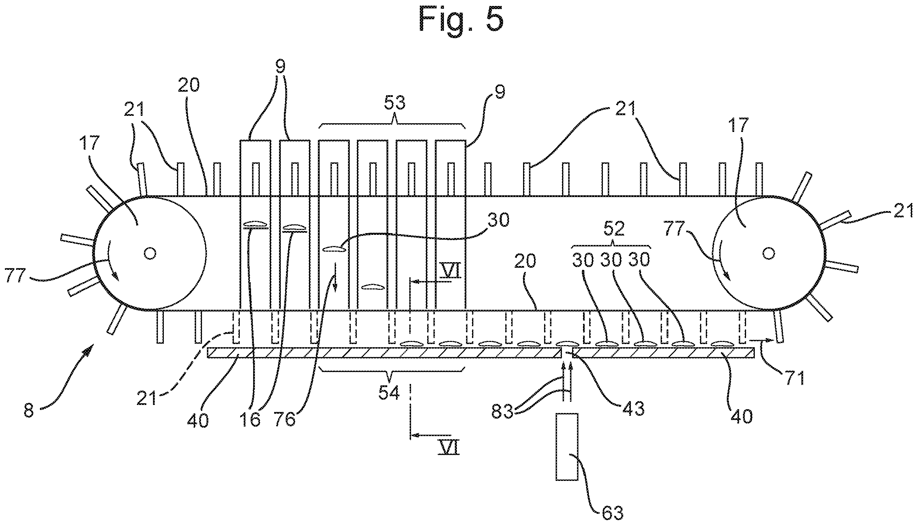

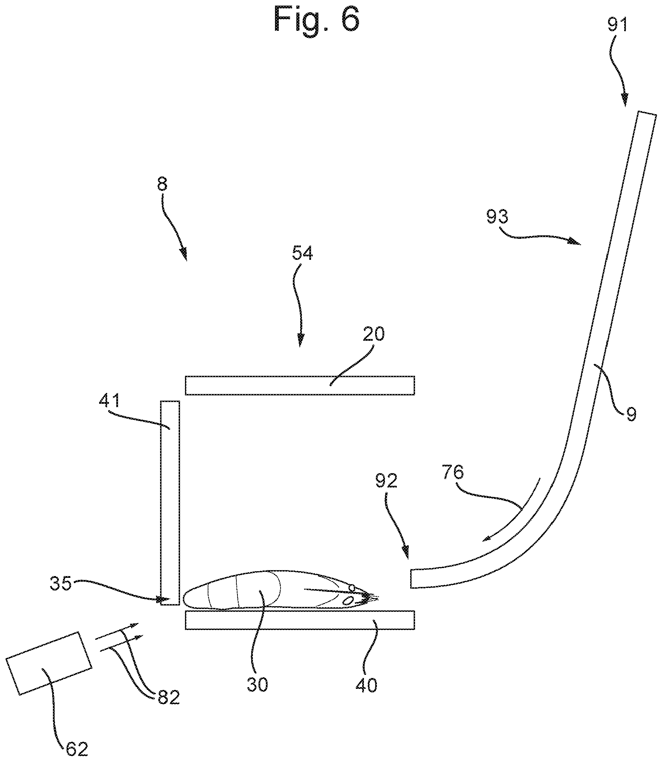

Fig. 5 shows that the output conveying means 8 comprise an endless output conveying belt 20, which is wound about two rolls 17 turning in the shown direction 77. The abovementioned separation walls are attached to this output conveying belt 20. These separation walls, which are extending transversely to the output conveying belt 20, are each indicated by the reference numeral 21. The output conveying means 8 further comprise a fixedly arranged horizontal slippery bottom 40, as well as a fixedly arranged vertical slippery wall 41, see for example also Fig. 6.

In Figs. 3 and 5, the abovementioned shrimp dispensing trajectory 53 of the endless conveyor belt 10 of the sliding chute assembly 7 and the shrimp receiving trajectory of the output conveying means 8 are indicated by the reference numerals 53 and 54, respectively. The guiding element 18, which presses the blade 11 of the valve 16 upwards (see Fig. 4B) is fixedly arranged in an area which is extending from just before the shrimp dispensing trajectory 53 till somewhere within the shrimp dispensing trajectory 53. Hereby, the valve 16 of each sliding chute 9, moving together with the conveyor belt 10, is opened just before the dispensing trajectory 53, whereafter the shrimp 30 in the shrimp dispensing trajectory 53 can slide downwards in the direction of the arrow 76. Somewhere within the shrimp dispensing trajectory 53 the valve 16 closes again, in order to only open again in a next turning cycle of the conveyor belt 10, just before the shrimp dispensing trajectory 53.

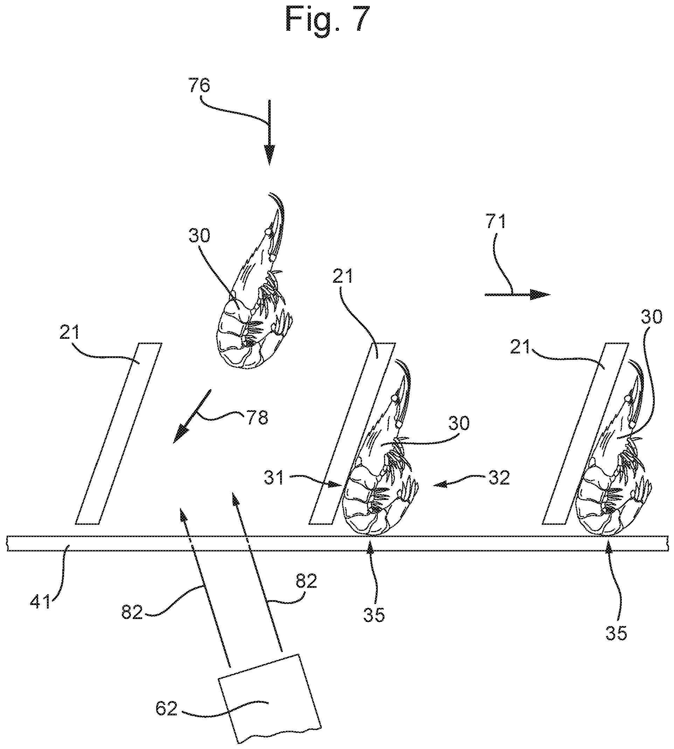

In Fig. 6 it is shown that in the shrimp transfering trajectory, formed by mutual overlapping of the shrimp dispensing trajectory 53 and the shrimp receiving trajectory 54, of the positioning apparatus 3 the shrimp exits 92 of the sliding chutes 9 discharge into the shrimp receiving trajectory 54 of the output conveying means 8. Hereby, the shrimp 30 can arrive at the slippery bottom 40, and be pushed forward, by a separation wall 21 concerned, over the slippery bottom 40 and along the slippery wall 41 in the direction of the arrow 71, also see Figs. 5 and 7.

Figs. 3, 6 and 7 further show second blowing means 62 with a corresponding second blowing flow 82, which promotes that a shrimp 30, sliding out of the sliding chute 9, after bumping against the slippery wall 41, remains nicely lying with its back 35 against the slippery wall 41. As can be seen in Fig. 7, the second blowing flow 82 is somewhat obliquely directed towards the separation wall 21, whereby the shrimp travels along a somewhat bent movement path, indicated by the arrow 78 in Fig. 7.

It can furthermore be seen in Fig. 7 that the separation walls 21 are at an oblique angle relative to the slippery wall 41. This oblique angle has been adjusted in relation to the specific shape of the shrimp type concerned and serves to take care that the shrimp lies with the correct part of its back 35 against the slippery wall 41.

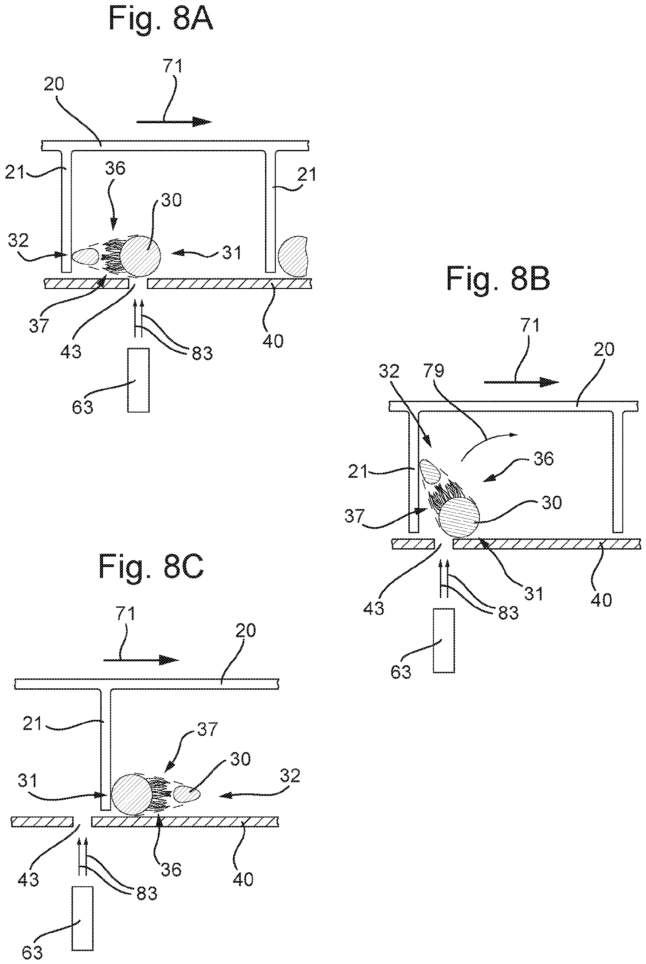

Figs. 5, 8A, 8B and 8C further show third blowing means 63 with a corresponding third blowing flow 83, which is upwardly directed through a blowing opening 43 in the slippery bottom 40. This blowing opening 43 is situated, in the sense of the movement direction 71, somewhat farther than the shrimp receiving trajectory 54 of the output conveying means 8. This third blowing means 63 with corresponding third blowing flow 83 are forming the abovementioned turn-around blowing means with corresponding turn-around blowing flow.

In the shown example of Figs. 8A, 8B and 8C it is assumed that it is the intention that all shrimp 30 in the singulated output row 52 will have to lie with their first shrimp longitudinal side 31 against the separation wall 21 concerned. The (continuous) turn-around blowing flow 83 takes care that a shrimp 30, which lies with its second shrimp longitudinal side 32 against the separation wall 21 concerned, as shown in Fig. 8A, will be automatically turned-around. If the turn-around blowing flow 83 for a certain shrimp type has been adjusted to be neither too strong nor too weak, the turn-around blowing flow 83 will cause the shrimp 30 to roll over its first shrimp longitudinal side 31, as shown in Fig. 8B, whereafter the shrimp will end up in the desired orientation as shown in Fig. 8C. In case the shrimp 30 in Fig. 8A would already have been in the desired orientation, i.e. with its first shrimp longitudinal side 31 against the separation wall 21, then the turn-around blowing flow 83 concerned can not cause the shrimp 30 to turn around. In the first place, this is because of the teardrop-like shape, in the shown cross-section, of the shrimp, which makes that the shrimp rolls easier over its first shrimp longitudinal side 31 than over its second shrimp longitudinal side 31. And, in the second place, this is because the shrimp experiences high rolling resistance for rolling around its first shrimp longitudinal side 31 when that first shrimp longitudinal side 31 lies against the separation wall 21.

Now, with reference to Figs. 2, 3 and 5, a brief summary is given of the trajectory followed by the shrimp 30 in the shrimp peeling apparatus 1. In Fig. 2 it is seen that the shrimp 30 from the first singulated row 51 are supplied to the positioning apparatus 3 in the shown direction 70. The supply location where this supplying takes place is seen in Fig. 3, where the arrow 70 points to the supply location of a shrimp 30 to a shrimp entry 91 of a sliding chute 9, which at that moment is located there. The movement speed of the first singulated row 51 with the mutual distances between the shrimp 30 from the first singulated row 51 are tuned in such manner to the rotation speed of the conveyor belt 10 and to the mutual distances between the sliding chutes 9, that successive shrimp 30 from the first singulated row 51 are supplied at said supply location one after the other to sliding chutes 9 of the sliding chute assembly 7, which sliding chutes 9 are succesively passing by there. At the moment when a shrimp 30 is supplied to each sliding chute 9, the valve 16 is in the closed condition as shown in Fig. 4A. When the sliding chute 9 concerned has arrived just before the shrimp dispensing trajectory 53, the valve 16 transfers into its open condition as shown in Fig. 4B, as a consequence of the valve guiding element 18 being present there. In Fig. 5 the reference numeral 16 is shown twice to indicate the final two locations before the shrimp dispensing trajectory 53 where a valve 16 concerned still is in its closed condition. Somewhat later a valve 16 concerned thus transfers into its open condition.

In Figs. 3 and 5 it can be seen that the shrimp 30 in the shrimp transfering trajectory of the positioning apparatus 3, which shrimp transfering trajectory is formed by the shrimp dispensing trajectory 53 and the shrimp receiving trajectory 54, gradually transfer to the singulated output row 52. In this singulated output row 52 the shrimp 30 are all lying with their backs 35 against the slippery wall 41. Therewith, a first degree of positioning of the shrimp is accomplished. The rotation speed of the conveyor belt 10 with the mutual distances between the sliding chutes 9 are tuned in such manner to the movement speed of the output conveyor belt 20 with the mutual distances between adjacent separation walls 21, that, in-between each pair of adjacent separation walls 21, each time there is supplied one of the shrimp 30 dispensed from the sliding chutes 9. For that purpose the movement speed of the conveyor belt 10 may for example be equal to the movement speed of the output conveyor belt 20, while the distances between all sliding chutes 9, lying next to one another, are equidistant and equal to the distances between all separation walls 21 lying next to one another, being equidistant as well. In that case, in the abovementioned shrimp transfering trajectory the shrimp exits 92 of a plurality of adjacent sliding chutes 9 can move along with the interspaces between separation walls 21 lying next to one aonther, while those co-moving shrimp exits 92 in the shrimp transfering trajectory during their movements remain discharging into those interspaces.

Thanks to the sliding chute assembly 7 and the output conveying means 8 co-operating therewith, the movement speed of the first singulated row 51 in the direction 70 can be relatively high and the mutual distance between the shrimp 30 in the first singulated row 51 can be relatively small, while also the movement speed of the singulated output row 52 in the direction 71 can be relatively high and the mutual distance between the shrimp 30 in the singulated output row 52 can be relatively small. Therewith, the throughput capacity is considerably increased in the positioning of shrimp based on downwards sliding of shrimp.

After said first degree of positioning of the shrimp, however, some shrimp are lying with their first shrimp longitudinal side 31 against a separation wall 21 concerned, while other shrimp are lying with their second shrimp longitudinal side 31 against a separation wall 21 concerned. After passing the blowing opening 43 in the slippery bottom 40, all shrimp 30 are lying with their first shrimp longitudinal side 31 against a separation wall 21 concerned. Therewith an additional degree of positioning of the shrimp is accomplished, which additional degree of positioning may be desirable for some peeling apparatus.

It is remarked that the singulated output row 52 at the end of the shown output conveying means 8 can, if desired, simply be transfered to a further output conveying means.

It is remarked that the abovementioned examples of embodiments of the invention do not limit the invention, and that various alternatives are possible within the scope of the appended claims. For example, various aspects of the shown apparatus may be adapted to various shapes and dimensions of various kinds of shrimp. However, other variations or modifications are also possible. These and similar alternatives are deemed to fall within the scope of the invention as defined in the appended claims.

## Claims

1. A positioning apparatus for, in operation condition, positioning of shrimp (30) in a predetermined orientation, wherein such a shrimp (30) is curved according to a substantially horseshoe-shape with a head (33) and a tail (34) at the respective free ends of the horseshoe-shape, with a back (35) facing away from the head and the tail, said shrimp (30) being supplied in singulated manner to the positioning apparatus (3), for obtaining a singulated output row (52) of shrimp being positioned in the predetermined orientation, wherein said output row is moving via output conveying means (8) of the positioning apparatus, said output conveying means having a shrimp receiving trajectory (54), and wherein the positioning apparatus comprises a sliding chute (9) for shrimp, said sliding chute comprising an upper shrimp entry (91), a lower shrimp exit (92), and an inclination trajectory (93) therebetween, and wherein as seen in said operation condition a thus supplied shrimp (30) successively:
(i) is supplied to the sliding chute (9) via said shrimp entry (91);
(ii) is downwardly sliding along the sliding chute (9) from said shrimp entry (91) towards said shrimp exit (92) so as to achieve that, based on gravitation, said downwardly sliding occurs with the back (35) of the shrimp facing forwards;
(iii) is dispensed via said shrimp exit (92) from the sliding chute; and
(iv) in said shrimp receiving trajectory (54) is supplied to the singulated output row (52); respectively;
**characterized in that**
the positioning apparatus (3) comprises a sliding chute assembly (7), which comprises an endless conveyor belt (10) and a multiplicity of said sliding chutes (9), said sliding chutes being held by the endless conveyor belt, wherein, as seen in said operation condition:
- the sliding chutes (9) in circumferential direction of the endless conveyor belt (10) are arranged next to one another with their inclination trajectories (93) alongside one another;
- the sliding chutes (9) in said arrangement are conveyed by the endless conveyor belt (10) in a manner of going round in said circumferential direction;
- the endless conveyor belt (10) of the sliding chute assembly (7) has a shrimp dispensing trajectory (53) in which the shrimp being dispensed from the sliding chutes via said shrimp exits (92) takes place.

2. A positioning apparatus according to claim 1, wherein each of the sliding chutes (9) comprises control means (16), being arranged for, in said operation condition, slowing down in a controlled manner and/or temporarily stopping in a controlled manner a shrimp (30), which is sliding over the sliding chute (9) concerned.

3. A positioning apparatus according to claim 2, wherein said control means comprises a valve (16) for, in said operation condition, temporarily stopping, at a predetermined height along the inclination trajectory (93) of the sliding chute (9) concerned, a shrimp (30) sliding along said inclination trajectory until the moment at which the sliding chute concerned has attained a set going-round-position in said circumferential direction of the endless conveyor belt (10).

4. A positioning apparatus according to any one of the preceding claims, wherein said shrimp dispensing trajectory (53) and said shrimp receiving trajectory (54) by mutual overlapping are forming a shrimp transfering trajectory (53, 54) of the positioning apparatus (3), in the sense that, as seen in said operation condition, in said shrimp transfering trajectory a multiplicity of said shrimp exits (92) of corresponding sliding chutes (9), which simultaneously are in said shrimp transfering trajectory, simultaneously allow for transfer of shrimp (30) from said sliding chutes to the singulated output row (52).

5. A positioning apparatus according to any one of the preceding claims, wherein such a shrimp (30) has a first shrimp longitudinal side (31) and an opposing second shrimp longitudinal side (32) corresponding to the respective legs of the horseshoe-shape, wherein the head is at an end of the first shrimp longitudinal side and the tail is at an end of the second shrimp longitudinal side, and wherein such a shrimp (30) has a first lying surface (36) and an opposing second lying surface (37), and wherein, as seen in said operation condition:
- the output conveying means (8) are arranged with separation walls (21), extending in height, between individual shrimp of the moving singulated output row (52); and
- such an individual shrimp, lying on its first lying surface or on its second lying surface, is lying with its first shrimp longitudinal side or with its second shrimp longitudinal side against such a separation wall.

6. A positioning apparatus according to claim 5, further comprising turn-around blowing means (63), which, as seen in said operation condition, by blowing create a turn-around blowing flow (83), which is directed to the first lying surface (36) concerned or the second lying surface (37) concerned of said individual shrimp (30), and on which said individual shrimp is lying, with at least a component of the turn-around blowing flow, which component is extending transverse to the first lying surface concerned or the second lying surface concerned, in such manner that
- the turn-around blowing flow does turn around a shrimp, which is lying with the second shrimp longitudinal side (32) against a separation wall (21) concerned, onto its other lying surface by rolling over its first shrimp longitudinal side (31); while
- a shrimp, which is lying with the first shrimp longitudinal side (31) against a separation wall (21) concerned, as a consequence of lying against the separation wall concerned is prevented from thus turning around.

7. A shrimp peeling apparatus (1), comprising a positioning apparatus (3) according to any one of the preceding claims, as well as a peeling apparatus (4) for mechanized peeling of shrimp (30) from said singulated output row (52) of shrimp being positioned in the predetermined orientation.

8. A method for positioning of shrimp (30) in a predetermined orientation, wherein such a shrimp (30) is curved according to a substantially horseshoe-shape with a head (33) and a tail (34) at the respective free ends of the horseshoe-shape, with a back (35) facing away from the head and the tail, said shrimp being supplied in singulated manner to a positioning apparatus (3), for obtaining a singulated output row (52) of shrimp being positioned in the predetermined orientation, wherein said output row is moving via output conveying means (8) of the positioning apparatus, said output conveying means having a shrimp receiving trajectory (54), and wherein the positioning apparatus comprises a sliding chute (9) for shrimp, said sliding chute comprising an upper shrimp entry (91), a lower shrimp exit (92), and an inclination trajectory (93) therebetween, and wherein, as seen in operation condition of the positioning apparatus, a thus supplied shrimp (30) successively:
(i) is supplied to the sliding chute (9) via said shrimp entry (91);
(ii) is downwardly sliding along the sliding chute (9) from said shrimp entry (91) towards said shrimp exit (92) so as to achieve that, based on gravitation, said downwardly sliding occurs with the back (35) of the shrimp facing forwards;
(iii) is dispensed via said shrimp exit (92) from the sliding chute; and
(iv) in said shrimp receiving trajectory (54) is supplied to the singulated output row (52); respectively;
**characterized in that**
the positioning apparatus (3) comprises a sliding chute assembly (7), which comprises an endless conveyor belt (10) and a multiplicity of said sliding chutes (9), said sliding chutes being held by the endless conveyor belt, wherein, as seen in said operation condition:
- the sliding chutes in circumferential direction of the endless conveyor belt are arranged next to one another with their inclination trajectories (93) alongside one another;
- the sliding chutes in said arrangement are conveyed by the endless conveyor belt (10) in a manner of going round in said circumferential direction;
- the endless conveyor belt of the sliding chute assembly has a shrimp dispensing trajectory (53);
- said supplied shrimp (30) are supplied to the sliding chutes via the corresponding shrimp entries (91) of the sliding chutes; and
- in the shrimp dispensing trajectory (53) the shrimp are dispensed from the sliding chutes via the corresponding shrimp exits (92) of the sliding chutes, and in the shrimp receiving trajectory (54) of the output conveying means (8) the shrimp are supplied to the singulated output row (52).

9. A method according to claim 8, wherein said positioning apparatus (3) is a positioning apparatus according to any one of claims 1-6.

10. A method according to claim 8, wherein said positioning apparatus (3) is part of a shrimp peeling apparatus (1), being in operation, according to claim 7.

## Patentansprüche

1. Positioniervorrichtung zum, im Betriebszustand, Positionieren von Garnelen (30) in einer vorbestimmten Ausrichtung, wobei eine solche Garnele (30) gemäß einer im Wesentlichen Hufeisenform gekrümmt ist, mit einem Kopf (33) und einem Schwanz (34) an den jeweiligen freien Enden der Hufeisenform, mit einem Rücken (35) der vom Kopf und Schwanz weg gerichtet ist, welche Garnele (30) einzeln der Positioniervorrichtung (3) zugeführt werden, um eine Einzelausgabereihe (52) von in der vorbestimmten Ausrichtung positionierten Garnelen zu erhalten, wobei die Ausgabereihe sich über Ausgabefördermittel (8) der Positioniervorrichtung bewegt, welche Ausgabefördermittel eine Garnelenaufnahmebahn (54) haben, und wobei die Positioniervorrichtung eine Gleitrinne (9) für Garnelen hat, die Gleitrinne umfassend einen oberen Garneleneingang (91), einen unteren Garnelenausgang (92) und dazwischen eine Neigungsbahn (93) hat und wobei, wie im Betriebszustand gesehen, eine so zugeführte Garnele (30) nacheinander:
(i) der Gleitrinne (9) über den Garneleneingang (91) zugeführt wird;
(ii) abwärts entlang der Gleitrinne (9) von dem Garneleneingang (91) zu dem Garnelenausgang (92) gleitet, sodass, um dies zu erreichen, das Abwärtsgleiten basierend auf Schwerkraft mit dem Rücken (35) der Garnele nach vorn gerichtet erfolgt;
(iii) über den Garnelenausgang (92) von der Gleitrinne abgeführt wird; und
(iv) in der Garnelenaufnahmebahn (54) jeweils der einzelnen Ausgabereihe (52) zugeführt wird;
**dadurch gekennzeichnet, dass**
die Positioniervorrichtung (3) eine Gleitrinnenanordnung (7) umfasst, die ein Endlosförderband (10) und eine Vielzahl der Gleitrinnen (9) umfasst, welche Gleitrinnen von dem Endlosförderband gehalten werden, wie im Betriebszustand gesehen, wobei
- die Gleitrinnen (9) in Umfangrichtung des Endlosförderbandes (10) nebeneinander angeordnet sind, mit ihren Neigungsbahnen (93) längsseits voneinander;
- die Gleitrinnen (9) in der Anordnung von dem Endlosförderband (10) so befördert werden, dass sie in der Umfangrichtung herumgehen;
- das Endlosförderband (10) der Gleitrinnenanordnung (7) eine Garnelenausgabebahn (53) hat, in der die Ausgabe der über den Garnelenausgang (92) ausgegebenen Garnele erfolgt.

2. Positioniervorrichtung nach Anspruch 1, wobei jede der Gleitrinnen (9) Steuerungsmittel (16) umfasst, angeordnet um im Betriebszustand eine Garnele (30), die über die betreffende Gleitrinne (9) gleitet, auf kontrollierte Weise zu verlangsamen und/oder vorübergehend zu stoppen.

3. Positioniervorrichtung nach Anspruch 2, wobei das Steuerungsmittel ein Ventil (16) umfasst, um im Betriebszustand eine Garnele (30), die entlang der Neigungsbahn gleitet, vorübergehend in einer vorbestimmten Höhe entlang der Neigungsbahn (93) der betreffenden Gleitrinne (9) zu stoppen, bis zu dem Moment, an dem die betreffende Gleitrinne eine eingestellte Herumgehposition in der Umfangrichtung des Endlosförderbandes (10) erreicht hat.

4. Positioniervorrichtung nach einem der vorhergehenden Ansprüche, wobei die Garnelenausgabebahn (53) und die Garnelenaufnahmebahn (54) durch gegenseitige Überlappung eine Garnelenübertragungsbahn (53, 54) der Positioniervorrichtung (3) bilden, in dem Sinne dass, wie im Betriebszustand gesehen, in der Garnelenübertragungsbahn eine Vielzahl der Garnelenausgänge (92) entsprechender Gleitrinnen (9), die gleichzeitig in der Garnelenübertragungsbahn sind, eine Übertragung von Garnelen (30) von den Gleitrinnen zu der einzelnen Ausgabereihe (52) erlauben.

5. Positioniervorrichtung nach einem der vorhergehenden Ansprüche, wobei eine solche Garnele (30) eine erste Garnelenlängsseite (31) und eine entgegengesetzte zweite Garnelenlängsseite (32) entsprechend den jeweiligen Beinen der Hufeisenform hat, wobei der Kopf an einem Ende der ersten Garnelenlängsseite ist und der Schwanz an einem Ende der zweiten Garnelenlängsseite ist und wobei eine solche Garnele (30) eine erste Liegeoberfläche (36) und eine entgegengesetzte zweite Liegeoberfläche (37) hat und wobei, wie im Betriebszustand gesehen:
- die Ausgabefördermittel (8) mit in Höhe verlaufenden Trennwänden (21) zwischen einzelnen Garnelen der Einzelausgabereihe (52) angeordnet ist; und
- eine solche einzelne Garnele, die auf ihrer ersten Liebeoberfläche oder auf ihrer zweiten Liegeoberfläche liegt, mit ihrer ersten Garnelenlängsseite oder mit ihrer zweiten Garnelenlängsseite gegen eine solche Trennwand liegt.

6. Positioniervorrichtung nach Anspruch 5, ferner umfassend Umdrehblasmittel (63), die, wie im Betriebszustand gesehen, durch Blasen einen Umdrehblasstrom (83) schaffen, der gerichtet ist zu der ersten betreffenden Liegeoberfläche (36) oder der zweiten betreffenden Liegeoberfläche (37) der einzelnen Garnele (30) und auf der die einzelne Garnele liegt, mit mindestens einer Komponente des Umdrehblasstroms, welche Komponente quer zu der ersten betreffenden Liegeoberfläche oder der zweiten betreffenden Liegeoberfläche verläuft, sodass
- der Umdrehblasstrom eine Garnele, die mit der zweiten Garnelenlängsseite (32) gegen eine betreffende Trennwand (21) liegt, durch Rollen über ihre erste Garnelenlängsseite (31) auf ihre andere Liegeoberfläche dreht; während
- eine Garnele, die mit der ersten Garnelenlängsseite (31) gegen eine betreffende Trennwand (21) liegt, aufgrund des Liegens gegen die betreffende Trennwand daran gehindert wird, sich umzudrehen.

7. Garnelenschälvorrichtung (1), umfassend eine Positioniervorrichtung (3) nach einem der vorhergehenden Ansprüche sowie eine Schälvorrichtung (4) zum mechanischen Schälen einer Garnele (30) von der Einzelausgabereihe (52) von Garnelen, positioniert in der vorbestimmten Ausrichtung.

8. Verfahren zum Positionieren von Garnelen (30) in einer vorbestimmten Ausrichtung, wobei eine solche Garnele (30) gemäß einer im Wesentlichen Hufeisenform gekrümmt ist, mit einem Kopf (33) und einem Schwanz (34) an den jeweiligen freien Enden der Hufeisenform, mit einem Rücken (35), der von dem Kopf und dem Schwanz weg gerichtet ist, welche Garnele einzeln einer Positioniervorrichtung (3) zugeführt wird, um eine Einzelausgabereihe (52) von Garnelen, positioniert in der vorbestimmten Ausrichtung, zu erhalten, wobei die Ausgabereihe sich über Ausgabefördermittel (8) der Positioniervorrichtung bewegt, welche Ausgabefördermittel eine Garnelenaufnahmebahn (54) haben und wobei die Positioniervorrichtung eine Gleitrinne (9) für Garnelen umfasst, die Gleitrinne umfassend einen oberen Garneleneingang (91), einen unteren Garnelenausgang (92) und dazwischen eine Neigungsbahn (93), und wobei, wie im Betriebszustand der Positioniervorrichtung gesehen, eine so zugeführte Garnele (30) nacheinander:
(i) der Gleitrinne (9) über den Garneleneingang (91) zugeführt wird;
(ii) abwärts entlang der Gleitrinne (9) von dem Garneleneingang (91) zu dem Garnelenausgang (92) gleitet, sodass, um dies zu erreichen, das Abwärtsgleiten basierend auf Schwerkraft mit dem Rücken (35) der Garnele nach vorn gerichtet erfolgt;
(iii) über den Garnelenausgang (92) von der Gleitrinne abgeführt wird; und
(iv) in der Garnelenaufnahmebahn (54) jeweils der Einzelausgabereihe (52) zugeführt wird;
**dadurch gekennzeichnet, dass**
die Positioniervorrichtung (3) eine Gleitrinnenanordnung (7) umfasst, die ein Endlosförderband (10) und eine Vielzahl der Gleitrinnen (9) umfasst, welche Gleitrinnen von dem Endlosförderband gehalten werden, wie im Betriebszustand gesehen;
- die Gleitrinnen in Umfangrichtung des Endlosförderbandes nebeneinander angeordnet sind, mit ihren Neigungsbahnen (93) längsseits voneinander;
- die Gleitrinnen in der Anordnung von dem Endlosförderband (10) so befördert werden, dass sie in der Umfangrichtung herumgehen;
- das Endlosförderband der Gleitrinnenanordnung eine Garnelenausgabebahn (53) hat,
- die zugeführten Garnelen (30) den Gleitrinnen über die entsprechenden Garneleneingänge (91) der Gleitrinnen zugeführt werden; und
- in der Garnelenausgabebahn (53) die Garnelen von den Gleitrinnen über die entsprechenden Garnelenausgänge (92) der Gleitrinnen ausgegeben werden und in der Garnelenaufnahmebahn (54) der Ausgabefördermittel (8) die Garnelen der Einzelausgabereihe (52) zugeführt werden.

9. Verfahren nach Anspruch 8, wobei die Positioniervorrichtung (3) eine Positioniervorrichtung nach einem der Ansprüche 1-6 ist.

10. Verfahren nach Anspruch 8, wobei die Positioniervorrichtung (3) Teil einer Garnelenschälvorrichtung (1) nach Anspruch 7 ist, die in Betrieb ist.

## Revendications

1. Appareil de positionnement destiné à, dans une condition de fonctionnement, positionner une crevette (30) selon une orientation prédéterminée, dans lequel ladite crevette (30) est courbée sensiblement en forme de fer à cheval avec une tête (33) et une queue (34) aux extrémités libres respectives de la forme de fer à cheval, avec une partie arrière (35) détournée de la tête et de la queue, ladite crevette (30) étant fournie séparément à l'appareil de positionnement (3), afin d'obtenir une rangée de sortie (52) de crevettes positionnées selon l'orientation prédéterminée, dans lequel ladite rangée de sortie se déplace à l'aide de moyens d'acheminement de sortie (8) de l'appareil de positionnement, lesdits moyens d'acheminement de sortie ayant une trajectoire de réception de crevette (54), et dans lequel l'appareil de positionnement comprend une goulotte (9) destinée aux crevettes, ladite goulotte comprenant une entrée de crevettes supérieure (91), une sortie de crevettes inférieure (92), et une trajectoire d'inclinaison (93) entre celles-ci, et dans lequel, dans ladite condition de fonctionnement, une crevette ainsi fournie (30), successivement :
(i) est fournie à la goulotte (9) par ladite entrée de crevettes (91) ;
(ii) glisse vers le bas le long de la goulotte (9) depuis ladite entrée de crevettes (91), vers ladite sortie de crevettes (92) de façon à ce que, sur la base de la gravitation, ledit glissement vers le bas ait lieu avec l'arrière (35) de la crevette tourné vers l'avant ;
(iii) est distribuée par ladite sortie de crevettes (92) depuis la goulotte ;
et
(iv) sur ladite trajectoire de réception de crevettes (54), est fournie à la rangée de sortie (52), respectivement ;
**caractérisé en ce que**
l'appareil de positionnement (3) comprend un ensemble de goulotte (7), qui comprend une courroie de transport sans fin (10) et une multitude desdites goulottes (9), lesdites goulottes étant maintenues par la courroie de transport sans fin, dans lequel, dans ladite condition de fonctionnement :
- les goulottes (9), dans la direction circonférentielle de la courroie de transport sans fin (10), sont prévues les unes près des autres, avec leurs trajectoires d'inclinaison (93) le long les unes des autres ;
- les goulottes (9), dans ledit agencement, sont acheminées par la courroie de transport sans fin (10) en tournant dans ladite direction circonférentielle ;
- la courroie de transport sans fin (10) de l'ensemble de goulotte (7) possède une trajectoire de distribution de crevettes (53) sur laquelle se déplacent les crevettes distribuées par les goulottes, à l'aide desdites sorties de crevettes (92).

2. Appareil de positionnement selon la revendication 1, dans lequel chacune des goulottes (9) comprend un moyen de commande (16), prévu pour, dans ladite condition de fonctionnement, ralentir de manière contrôlée et/ou arrêter temporairement de manière contrôlée une crevette (30), qui glisse sur la goulotte (9) concernée.

3. Appareil de positionnement selon la revendication 2, dans lequel ledit moyen de commande comprend une soupape (16) destinée à, dans ladite condition de fonctionnement, arrêter temporairement, à une haute prédéterminée le long de la trajectoire d'inclinaison (93) de la goulotte (9) concernée, une crevette (30) qui glisse le long de ladite trajectoire d'inclinaison, jusqu'à ce que la goulotte concernée atteigne une position de rotation définie dans ladite direction circonférentielle de la courroie de transport sans fin (10).

4. Appareil de positionnement selon l'une quelconque des revendications précédentes, dans lequel ladite trajectoire de distribution de crevettes (53) et ladite trajectoire de réception de crevettes (54), par chevauchement mutuel, forment une trajectoire de transfert de crevettes (53, 54) de l'appareil de positionnement (3), au sens où, dans ladite condition de fonctionnement, sur ladite trajectoire de transfert de crevettes, une multitude desdites sorties de crevettes (92) des goulottes correspondantes (9), qui se trouvent simultanément sur ladite trajectoire de transfert de crevettes, permettent simultanément le transfert d'une crevette (30) desdites goulottes vers la rangée de sortie (52).

5. Appareil de positionnement selon l'une quelconque des revendications précédentes, dans lequel ladite crevette (30) possède un premier côté longitudinal de crevette (31) et un second côté longitudinal de crevette opposé (32) correspondant aux pattes respectives de la forme de fer à cheval, dans lequel la tête se trouve à une extrémité du premier côté longitudinal de crevette et la queue se trouve à une extrémité du second côté longitudinal de crevette, et dans lequel ladite crevette (30) possède une première surface de pose (36) et une seconde surface de pose opposée (37), et dans lequel, dans ladite condition de fonctionnement :
- les moyens d'acheminement de sortie (8) sont munis de parois de séparation (21), qui s'étendent en hauteur, entre les crevettes de la rangée de sortie séparée qui se déplace (52) ; et
- une crevette, posée sur sa première surface de pose ou sur sa seconde surface de pose, est posée avec son premier côté longitudinal de crevette ou avec son second côté longitudinal de crevette contre une paroi de séparation.

6. Appareil de positionnement selon la revendication 5, comprenant en outre un moyen de soufflage de retournement (63) qui, dans ladite condition de fonctionnement, par soufflage, crée un flux de soufflage de retournement (83), qui est orienté vers la première surface de pose (36) concernée ou la seconde surface de pose (37) concernée de ladite crevette (30), sur laquelle ladite crevette est posée, avec au moins une composante du flux de soufflage de retournement, ladite composante s'étendant transversalement à la première surface de pose concernée ou à la seconde surface de pose concernée, de sorte que
- le flux de soufflage de retournement ne retourne pas une crevette, qui est posée avec le second côté longitudinal de crevette (32) contre une paroi de séparation (21) concernée, sur son autre surface de pose en retournant son premier côté longitudinal de crevette (31) ; tandis que
- une crevette, qui est posée avec le premier côté longitudinal de crevette (31) contre une paroi de séparation (21) concernée, après avoir été posée contre la paroi de séparation concernée, ne peut se retourner.

7. Appareil d'épluchage de crevettes (1), comprenant un appareil de positionnement (3) selon l'une quelconque des revendications précédentes, ainsi qu'un appareil d'épluchage (4) destiné à éplucher mécaniquement une crevette (30) provenant de ladite rangée de sortie (52) de crevettes positionnées selon l'orientation prédéterminée.

8. Procédé de positionnement d'une crevette (30) selon une orientation prédéterminée, dans lequel ladite crevette (30) est courbée sensiblement en forme de fer à cheval avec une tête (33) et une queue (34) aux extrémités libres respectives de la forme de fer à cheval, avec une partie arrière (35) détournée de la tête et de la queue, ladite crevette étant fournie séparément à un appareil de positionnement (3), afin d'obtenir une rangée de sortie (52) de crevettes positionnées selon l'orientation prédéterminée, dans lequel ladite rangée de sortie se déplace à l'aide de moyens d'acheminement de sortie (8) de l'appareil de positionnement, lesdits moyens d'acheminement de sortie ayant une trajectoire de réception de crevette (54), et dans lequel l'appareil de positionnement comprend une goulotte (9) destinée aux crevettes, ladite goulotte comprenant une entrée de crevettes supérieure (91), une sortie de crevettes inférieure (92), et une trajectoire d'inclinaison (93) entre celles-ci, et dans lequel, dans ladite condition de fonctionnement de l'appareil de positionnement, une crevette ainsi fournie (30), successivement :
(i) est fournie à la goulotte (9) par ladite entrée de crevettes (91) ;
(ii) glisse vers le bas le long de la goulotte (9) depuis ladite entrée de crevettes (91), vers ladite sortie de crevettes (92) de façon à ce que, sur la base de la gravitation, ledit glissement vers le bas ait lieu avec l'arrière (35) de la crevette tourné vers l'avant ;
(iii) est distribuée par ladite sortie de crevettes (92) depuis la goulotte ;
et
(iv) sur ladite trajectoire de réception de crevettes (54), est fournie à la rangée de sortie (52), respectivement ;
**caractérisé en ce que**
l'appareil de positionnement (3) comprend un ensemble de goulotte (7), qui comprend une courroie de transport sans fin (10) et une multitude desdites goulottes (9), lesdites goulottes étant maintenues par la courroie de transport sans fin, dans lequel, dans ladite condition de fonctionnement :
- les goulottes, dans la direction circonférentielle de la courroie de transport sans fin, sont prévues les unes près des autres, avec leurs trajectoires d'inclinaison (93) le long les unes des autres ;
- les goulottes, dans ledit agencement, sont acheminées par la courroie de transport sans fin (10) en tournant dans ladite direction circonférentielle ;
- la courroie de transport sans fin de l'ensemble de goulotte possède une trajectoire de distribution de crevettes (53) ;
- lesdites crevettes fournies (30) sont fournies aux goulottes par les entrées de crevettes correspondantes (91) des goulottes ; et
- sur la trajectoire de distribution de crevettes (53), les crevettes sont distribuées depuis les goulottes par les sorties de crevettes correspondantes (92) des goulottes, et, sur la trajectoire de réception de crevettes (54) des moyens d'acheminement de sortie (8), les crevettes sont fournies à la rangée de sortie (52).

9. Procédé selon la revendication 8, dans lequel ledit appareil de positionnement (3) est un appareil de positionnement selon l'une quelconque des revendications 1 à 6.

10. Procédé selon la revendication 8, dans lequel ledit appareil de positionnement (3) fait partie d'un appareil d'épluchage de crevettes (1), qui fonctionne, selon la revendication 7.
